# EUROPEAN PATENT SPECIFICATION

(11) **EP 4 360 969 B1**
(45) Date of publication and mention of the grant of the patent: **25.02.2026**
(21) Application number: 23205263.9
(22) Date of filing: 23.10.2023
(51) Int. Cl.: B60T 8/17, B60T 17/22, B64C 25/22, G05B 19/46

(54) **HYDRAULIC SYSTEMS**
HYDRAULISCHE SYSTEME
SYSTÈMES HYDRAULIQUES

(30) Priority: 28.10.2022 GB 202215980
(43) Date of publication of application: 01.05.2024
(73) Proprietor: Airbus Operations Limited, Bristol BS34 7PA (GB)
(72) Inventor: BIDMEAD, Ashley, Bristol, BS34 7PA (GB); WOOTTON, Chris, Bristol, BS34 7PA (GB)
(74) Representative: Abel & Imray LLP

(56) References cited:
- EP-B1- 1 080 009
- US-A- 4 007 970
- US-A1- 2010 292 889
- US-A1- 2012 133 200
- US-B2- 11 021 237

## Description

### BACKGROUND OF THE INVENTION

The present disclosure relates to hydraulic systems.

The present invention concerns the operation of hydraulic systems. More particularly, but not exclusively, this invention concerns a method of operating the brake system of an aircraft. The invention also concerns a hydraulic brake system for activating the wheel brakes of an aircraft, and other related subject matter.

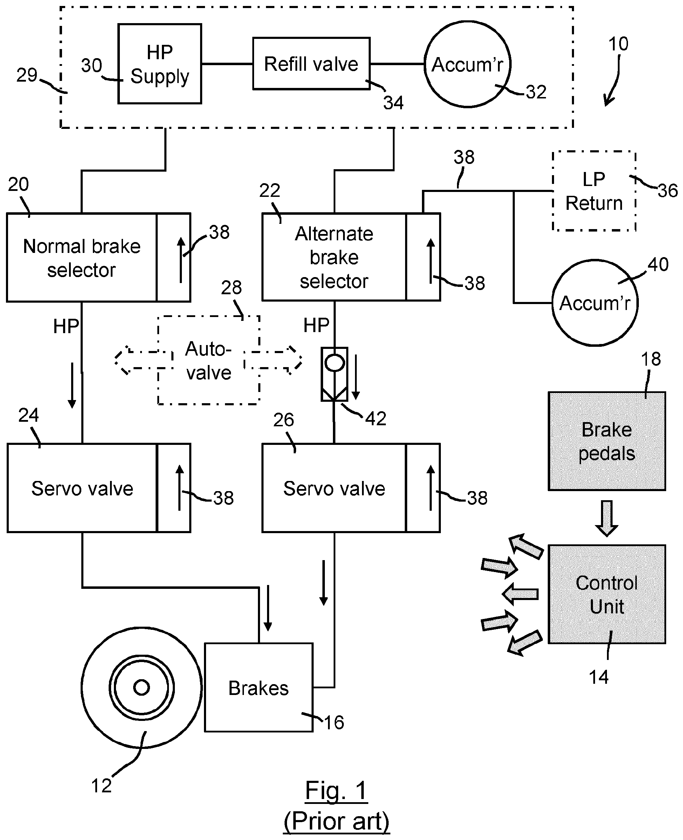

Figure 1 shows, schematically, a brake system 10 for the wheels 12 of an aircraft (not shown separately in Figure 1) of the prior art (for example an Airbus A350 aircraft - referred to below simply as an "A350"). A control unit 14 controls the action of various valves in order to provide for braking of the wheels of the aircraft. The brakes 16 are actuated hydraulically, under the action of hydraulic fluid which is controlled by a hydraulic circuit. Parts only of a typical hydraulic circuit of the A350 are shown in Figure 1. The hydraulic circuit provides for redundancy in the braking system, in that there is a normal braking system and an alternate braking system, and also two different supplies of hydraulic power (referred to, in the context of the A350, by the labels "yellow" hydraulic system and "green" hydraulic system - not shown separately in Figure 1).

In normal circumstances, when a pilot of the aircraft commands action of the brakes 16 by means of depressing a brake pedal 18, the control unit 14 causes the valves of the hydraulic circuit to operate in a manner which causes high pressure ("HP") hydraulic fluid to move the brakes 16 into an engaged position in which a braking force is applied to the wheel(s) 12. In such a normal braking configuration, the normal brake selector valve 20 is in its normal braking configuration (with the alternate brake selector valve 22 being in a position which allows for normal braking), and the associated servo valve 24 is operable to control the level of braking required.

In circumstances where normal braking is unavailable, or where alternate braking is otherwise required, the alternate braking parts of the hydraulic circuit are activated, including the alternate brake selector valve 22 and the associated servo valve 26. Optionally, this may be something that is automatically selected by an (optional) automatic valve 28, that operates if the normal braking side of the circuit has a loss of pressure for example. Both the normal and alternate brake circuits are fed with high pressure hydraulic fluid from a supply 29. The supply includes a reservoir 30 of fluid, hydraulic pumps (not shown) for pressuring the fluid, and an accumulator 32 to help regulate hydraulic volume/pressure. Thus, the alternate brake circuit at least may be powered with fluid under pressure maintained by the accumulator 32. That accumulator 32 may itself be pressurised and filled with hydraulic fluid, as and when required, via a dedicated refill valve 34. Return lines 38 (not all of which being shown in Figure 1) for the releasing of pressure from the brakes 16 are provided. There may be return line paths 38 associated with each of the selector valves and servo valves too for example. Hydraulic fluid passes via the return lines 38 through the valves, at lower pressure, to the aircraft's hydraulic circuits (shown schematically by the "LP Return" box 36 in Figure 1). It will be appreciated that in certain aircraft the return lines share pipes that are used as supply lines, for example locally to the brakes. An accumulator 40 is provided for regulating the amount of fluid in the return line. Check valves are present in the system (not shown in Figure 1). A park brake sub-system is also provided (not shown in Figure 1).

An automatically-resetting hydraulic fuse 42 is supplied in the high pressure line between the alternate brake selector valve 22 and the associated servo valve 26. The fuse 42 trips in the event of atypical high flow of fluid that would be suggestive of a fault in the system, such as a fractured pipe or other leak for example.

The function of the alternate brake system is routinely checked, typically as part of a pre-land test. This may be at least partially automated, and/or undertaken by flight crew as part of standard procedures. It has been observed that testing of the alternate brake system results in false reports of system faults and/or reports of faults more frequently than would be ideal. The tripping of the hydraulic fuse 42 is an example of how such faults, whether false or otherwise, may be detected. It is of course of the utmost importance for standard and routine system tests to detect faults reliably. However, having more false (or avoidable) fault reports than desirable, may cause delays in operations and/or extra potentially unnecessary maintenance time that could be mitigated if a more accurate/reliable testing regime were implemented and/or if an improved braking system were provided.

Faults with the hydraulic system in an aircraft may result for various reasons including failure of parts of the hydraulic system and/or damage caused by debris or objects impacting against one or more pipes that carry hydraulic fluid. Such faults can result in the leakage of fluid. To mitigate against such leaks and to reduce the risk of depletion of the hydraulic system, measures may be employed - such as the installation of check valves and/or hydraulic fuses - to ensure that as many hydraulic systems as possible remain operational, despite the occurrence of a leaking pipe for example in a part of the system. As a result of fluid dynamics, the effects of extreme temperature variations and movement that an aircraft typically endures, the inventor has realised that such measures can contribute to problems associated with cavitation (i.e. there being cavities in the lines, for example as bubbles, vacuums, or other pockets that are empty of hydraulic fluid) within the hydraulic lines. This can cause system misbehaviours under nominal conditions (i.e. with no failures) leading to the false reporting / detecting of faults. Cavitation in the lines may also affect the efficient or proper operation of the hydraulic system for its intended purpose. Removing protective measures such as check valves and/or hydraulic fuses runs the risk of losing the protection against a fractured or burst pipe or severe leak in the system.

The present invention seeks to mitigate one or more of the above-mentioned problems. Alternatively or additionally, the present invention seeks to provide an improved brake system for an aircraft.

EP 1 080 009 B1 discloses a braking control system with dual redundant control of the hydraulic brake system. There is provided both a primary and secondary hydraulic system for the wheel brakes. Both systems are controlled by a control unit which monitors for faults and loss of pressure. US 2012/133200 A1 discloses a hydraulic system comprising a shut-off valve positioned between the pressure supply and wheel brake valve. Operation of the shut-off valve is controlled by a brake operation device which dictates the location of the poppet within the valve, either allowing fluid flow, or blocking it. US 2010/292889 A1 discloses a system, apparatus, and method of testing the operation of brake systems. By engaging the brakes and comparing the force measured during the test with a threshold force value, the operation of the brakes can be determined to be normal or abnormal. US 4 007 970 A discloses an automatic braking system for an aircraft which utilises several landing characteristics. By monitoring these characteristics, the rate of increase of braking pressure can be controlled along with the appropriate disarming of the system.
US 11 021 237 B2 discloses an aircraft hydraulic sub-system which can receive hydraulic fluid from two hydraulic fluid supplies, is isolated from one of the supplies at any given time depending on the state of an isolation valve, and controls the flow of fluid from the sub-system to the hydraulically-operable system of the aircraft hydraulic system.

### SUMMARY OF THE INVENTION

The present invention provides, according to a first aspect, a method of operating the brake system of an aircraft. Such a brake system comprises a supply line for supplying hydraulic fluid to one or more brakes and a corresponding return line. There may be more than one supply line and more than one return line. The brake system is arranged, under the action of the hydraulic fluid supplied via the supply line, to apply a braking force to one or more wheels of an aircraft landing gear assembly of the aircraft. The return of hydraulic fluid from the one or more brakes flows via the return line. Hydraulic fluid may also flow from other components via the same return lines, or parts thereof. The method includes a step of increasing the pressure and/or volume of hydraulic fluid in at least a portion of the return line, possibly substantially all of the return line. The step of increasing the pressure and/or volume of hydraulic fluid in the return line is carried out before initiating a subsequent step of activating the brake system to apply a braking force to the one or more wheels of the aircraft during landing (and typically well in advance of touch-down). As part of such a method, there may be a step of performing a test of the brake system before landing of the aircraft. If such a testing step is carried out, it is done after the step of increasing the pressure and/or volume of hydraulic fluid in the return line is carried out.

It has been found that by having a separate advance step of increasing the pressure and/or volume of hydraulic fluid in the return line of the hydraulic system, reliability can be increased. This may be because, in certain embodiments, if the return line (which is under low pressure compared to the supply line) is subject to variations in temperature, and/or vibration and movement, as are typical during operation of an aircraft during operation, hydraulic fluid pressure may be lost and there may be an increased risk of inadequate fluid being retained in the return line. Such things can increase the risk of cavitation in the hydraulic lines. If nothing is done about this before the brake system is tested, then there is a risk of the test failing, and the brake system being deemed inoperable unless remedial action is taken. It is of course desirable to avoid a situation where inadequate fluid is retained in the return line at a time when braking of the wheels is required, as that may adversely affect the efficiency and/or efficacy of the braking system - an adequate testing procedure would normally enable such scenarios to be avoided however.

The problems with cavitation, that can be avoided or reduced with the use of an embodiment utilising the method of the invention, are often associated with the presence of one or more (usually two or more) check valves (i.e. non-return valves) in the hydraulic lines, for example in one or more return line paths, or low pressure paths.

It may be that the step of increasing the pressure and/or volume of hydraulic fluid in the return line is performed without increasing the pressure of hydraulic fluid in the supply line.

The step of increasing the pressure and/or volume of hydraulic fluid in the return line may be conducted with the use of one or more valves of the brake system, optionally valves that are used for other purposes in any case also. Thus, the brake system used may be no more complicated or massive than would in any case be provided. It may be that the step of increasing the pressure and/or volume of hydraulic fluid in the return line is conducted without applying any braking force to the one or more wheels of the aircraft. It may for example be the case, in certain embodiments, that operating the system so as to apply a braking force to the one or more wheels of the aircraft (even if not on the ground) would inevitably cause the pressure of hydraulic fluid in the return line to increase. It will be understood however that in such a case, in the context of an embodiment of the present invention, the act of operating the hydraulic system in a way that applies a braking force to the one or more of the wheels would be for the purpose of increasing the pressure and/or volume of hydraulic fluid in the return line not for causing, or for the purpose of causing, deceleration of the aircraft. The step of increasing the pressure and/or volume of hydraulic fluid in the return line may be conducted by operating (e.g. opening and closing) a brake selector valve.

The brake system of the aircraft may include at least one valve for separating a source of hydraulic fluid, for example under higher pressure, from at least a portion of the return line, which for example contains hydraulic fluid at a lower pressure. Such a valve may for example provide the function of a one-way check valve (i.e. non-return valve) which resists the flow of fluid in a first direction via the valve while allowing high flow rates of hydraulic fluid in a second direction via the valve, the second direction being opposite to the first direction. Such a one-way check valve may reduce the risk of loss of hydraulic fluid from other parts in fluid communication with the return line on the other side of the check valve in the event of an unintentional leak existing in the brake system, for example between the one-way check valve and the brakes. There may be a park brake selector valve located on a hydraulic fluid path (e.g. a low pressure fluid path) between the one-way check valve and the brakes. Additionally or alternatively, there may be a brake selector valve (for braking on landing, not being the park brakes, for example normal braking or alternate braking) located on a hydraulic fluid path (e.g. a low pressure fluid path) between the one-way check valve and the brakes.

Increasing the pressure and/or volume of hydraulic fluid in the return line may utilise hydraulic fluid in an accumulator, for example in a locally provided accumulator, for example a separately provided return line accumulator.

It may be that the step of increasing the pressure and/or volume of hydraulic fluid in the return line is conducted in dependence on a measure of hydraulic pressure in the system, for example the pressure of the fluid in the return line. A pressure transducer may be provided to measure such a hydraulic pressure, and provide a suitable output, which is then used - for example by a control unit - to decide whether and how to increase the pressure and/or volume of hydraulic fluid. Such a pressure transducer may be arranged to measure the pressure of the hydraulic fluid in an accumulator, for example when the pressure of fluid in the accumulator is indicative of the pressure of the hydraulic fluid in the return line (for example being identical, or predictably related to each other in some way). The pressure transducer may need to be capable of accurately measuring relatively low fluid pressures, for example having an accuracy of +/- 1 bar (optionally, +/- 0.3 bar) or better at least for all measured pressures in the range of between 0.5 bar and 5 bar (optionally having an accuracy of +/- 10%, possibly +/-5% or better). Fluid from such an accumulator may be used to replenish the return line. Fluid may, alternatively or additionally, be provided from other sources.

The step of increasing the pressure and/or volume of hydraulic fluid in the return line may be conducted by means of increasing the pressure and/or volume of hydraulic fluid in the supply line.

As alluded to above, the step of increasing the pressure and/or volume of hydraulic fluid in the return line may be conducted by activating the brake system to apply a braking force to the one or more wheels of the aircraft before touch-down. This has the advantage of requiring very little in the way of system changes in order to implement an embodiment of the present invention on a suitable arranged existing aircraft.

In other embodiments, it may be that the step of increasing the pressure and/or volume of hydraulic fluid in the return line is conducted without applying any braking force to the one or more wheels of the aircraft

The brake system of the aircraft may comprise a primary brake sub-system and a secondary brake sub-system. The secondary brake sub-system may be provided as an alternate brake sub-system to provide redundancy in the overall braking system of the aircraft. The method of the present invention may be performed in relation to the secondary brake sub-system. In embodiments, this may be advantageous because an alternate brake sub-system may be more prone to problems associated with cavitation of the return lines in the brake system and/or may need to have different testing regimes or the like for the purposes of avoiding common failure points on the aircraft.

In embodiments, the method may comprise increasing the pressure and/or volume of hydraulic fluid in the return line, then as a separate step performing a test of the brake system, then as a separate step landing the aircraft at which time a braking force is applied by the brake system to the wheels of the aircraft.

It is preferred that the step of increasing the pressure and/or volume of hydraulic fluid in the return line is performed after the aircraft has previously landed and reduced its speed to taxiing speed, and before the aircraft touches down again after having performed its next take-off manoeuvre. The step may be conducted in-flight. It is preferred that all steps of the claimed method are performed after the aircraft has previously landed and reduced its speed to taxiing speed, and before the aircraft has completed its next landing phase. All such steps may be conducted in-flight, for example.

The method of the invention has particular application in relation to embodiments in which the aircraft has a first hydraulic system, and a second, alternate, hydraulic system. Thus the invention also provides a method of initialising a braking system on an aircraft before being used to cause braking of the wheels of the aircraft on landing, the aircraft having a first hydraulic system, and a second hydraulic system, provided as an alternate system which provides redundancy. The first hydraulic system may for example be arranged to power various parts of an aircraft including one or more control surfaces and one or more wheel brakes. The second hydraulic system may be arranged to power various parts of the aircraft including one or more control surfaces (some possibly being in common with those powered by the first hydraulic system, but not necessarily all being in common) and one or more wheel brakes (at least some, and preferably all, being in common with those powered by the first hydraulic system). The method includes increasing *in situ* the volume and/or pressure of the hydraulic fluid in the return line of the second hydraulic system from a supply of hydraulic fluid on the aircraft. This is done in advance of testing the second hydraulic system, which itself is done before landing of the aircraft (for example in flight, which may be part of a pre-land test regime). It may be that before the step of increasing *in situ* the volume and/or pressure of the hydraulic fluid in a part of the return line, fluid escapes from the same part of that return line via fluid passing via one of more one way check valves at low pressure (e.g. less than 5 bar) in a direction that the one-way check valves are configured to resist. It may be that before the step of increasing *in situ* the volume and/or pressure of the hydraulic fluid in a part of the return line, fluid escapes from the same part of that return line as a result of pressure differences caused by landing gear retraction.

The present invention also provides a hydraulic brake system for activating the wheel brakes of an aircraft. The brake system comprises a supply line for supplying hydraulic fluid to one or more brakes and a return line for the return of hydraulic fluid from the one or more brakes. The brakes are arranged, under the action of the hydraulic fluid from the supply line, to apply a braking force to one or more wheels of an aircraft landing gear assembly of the aircraft. The brake system also comprises a control unit for controlling operation of the hydraulic brakes. The control unit is configured to operate in each of multiple separate and distinct modes of operation (such modes of operation preferably all being for use during flight or landing of the aircraft). Thus there is a first mode of the control unit in which it causes an increase of the pressure and/or volume of hydraulic fluid in the return line (e.g. in the whole return line or at least a portion of it) without simultaneously activating the wheel brakes. The control unit also has a second, separate and distinct, mode of operation in which it causes the activation of the wheel brakes. The control unit may also have a third, separate and distinct, mode of operation. In its third mode of operation, the control unit causes a test of the brake system to be performed.

The hydraulic brake system may include a hydraulic fuse. It may be that when the fuse trips, the control unit is alerted of a potential fault in the hydraulic system. The control unit may be configured to monitor for signals from the hydraulic fuse when operated in its (optional) third mode of operation.

The brake system may include a pressure sensor. The control unit may be attached to such a pressure sensor. The pressure sensor may be arranged to provide a measure of the pressure in the return line. The control unit may be arranged to operate in the first mode of operation in response to the measure of the pressure in the return line detected by the pressure sensor. It may be that the control unit only increases the pressure and/or volume of hydraulic fluid in the return line in the first mode of operation in response to the pressure of the return line as measured by the pressure sensor meeting certain criteria (e.g. when the measured pressure is less than a given threshold value).

It may be that the control unit is arranged to operate one or more valves of the hydraulic brake system when in the first mode of operation (i.e. in order to increase the pressure and/or volume of hydraulic fluid in the return line) and is arranged to operate one or more valves (which may include one or more different valves, or which may all be the same) of the hydraulic brake system in a different way when in the second mode of operation (i.e. brake activation).

The present invention also provides a control unit for use in the other aspects of the present invention as described or claimed herein. For example the control unit may be specifically configured for use as the control unit of the above-mentioned hydraulic brake system of the invention. The control unit may be configured to perform one or more of the steps of any aspects of the method of operating the brake system of an aircraft of the present invention as described or claimed herein. The steps carried out by the control unit may be dictated by the instructions encoded with a computer program. Thus, the present invention may also provide a computer program product comprising instructions which, when the program is executed by a suitable computer or programmable control unit, cause the computer or control unit to carry out one or more of the steps of the method of operating the brake system of an aircraft of the present invention as described or claimed herein.

The present invention also provides an aircraft incorporating an embodiment of the present invention. For example the aircraft may include a hydraulic brake system of the present invention as described or claimed herein. As another example, the aircraft may include a control unit of the present invention as described or claimed herein and/or be otherwise configured to perform one or more steps of the method of the invention as described or claimed herein. The aircraft will typically comprise a retracting landing gear assembly, which may be retracted with the use of a hydraulic system. Retracting landing gear can utilise significant amounts of power from a hydraulic system, which if shared with a brake system for powering hydraulic brakes can have various effects on the brake system, in a way which makes the present invention particularly beneficial. The present invention may have particular benefit in a case where the aircraft includes a larger hydraulic system and a shared reservoir of hydraulic fluid. For example the reservoir of hydraulic fluid may be in fluid communication with both the hydraulic brake system and the larger hydraulic system. Such a larger hydraulic system is configured for hydraulically powering a part of the aircraft not being a wheel braking system. For example, the larger hydraulic system may be configured for hydraulically powering a control surface of the aircraft, such as ailerons, an elevator, a rudder, a slat, a flap, a spoiler, a wing tip device or the like. Additionally, or alternatively, the larger hydraulic system may be configured for hydraulically powering the deployment (e.g. extension) of and/or stowage (e.g. retraction of) a landing gear assembly of the aircraft or other parts of the aircraft that deploy and stow (or open and close) such as a door, including a door to the landing gear bay that when open permits passage of the landing gear. Additionally, or alternatively, the larger hydraulic system may be configured for hydraulically powering the steering of, or powering of, a landing gear wheel - for example of a nose landing gear.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
- Figure 1: shows a braking system of the prior art;
- Figure 2: shows an aircraft having a landing gear wheel that is associated with a braking system according to a first embodiment of the invention;
- Figure 3: shows in more detail the braking system of the first embodiment;
- Figure 4: shows some of the low pressure paths of hydraulic fluid in the braking system of the first embodiment;
- Figure 5: shows a braking system of a second embodiment; and
- Figure 6: shows an illustrative flow diagram of a method of an embodiment of the invention.

### DETAILED DESCRIPTION

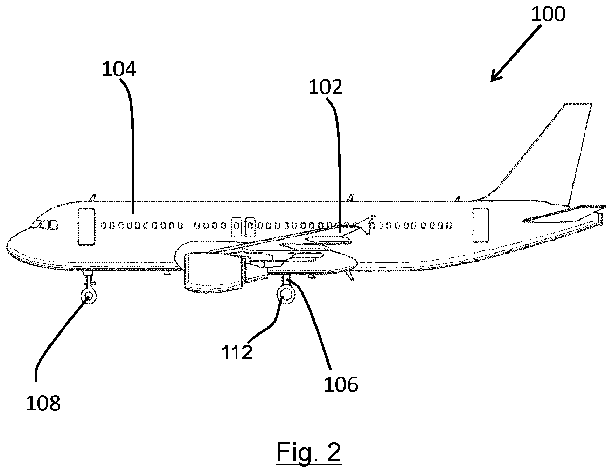

Figure 2 shows an aircraft 100 comprising a pair of wings 102 and a fuselage 104. The aircraft 100 is supported on the ground by two main landing gear assemblies (MLG) 106 and a nose landing gear assembly (NLG) 108. The MLG has wheels 112 which include brakes that are operated by a braking system of an embodiment of the present invention.

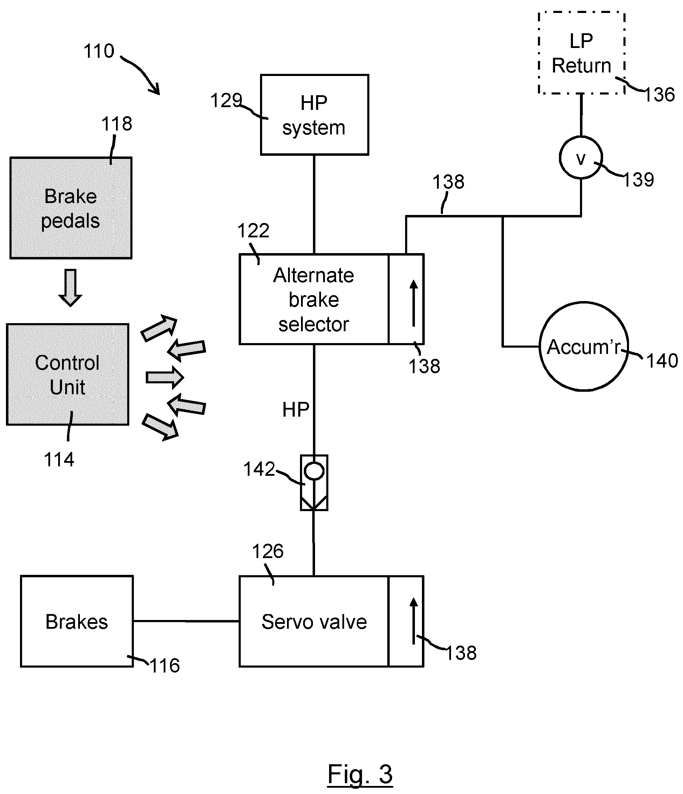

The braking system of a first embodiment is shown in Figure 3. It has a similar configuration to the prior art system shown in Figure 1 and described earlier. Similar reference numbers are used for similar parts, but preceded by the number "1" such that for example the brakes 16 of Figure 1 correspond to the brakes 116 of Figure 3. The hydraulic circuit provides for redundancy in the braking system in that there is a normal braking system (omitted from Figure 3) and an alternate braking system. The hydraulic circuit shown in Figure 3 forms part of a larger hydraulic system of the aircraft, which controls other hydraulic equipment (not shown) and functions, such as landing gear retraction. The larger hydraulic system comprises separate and independent hydraulic circuits, such as the yellow and green systems mentioned above.

Figure 3 shows the alternate brake system primarily. A control unit 114 controls the action of the alternate brake selector valve 122 and the associated servo valve 126 in order to hydraulically actuate wheel brakes 116 and provide alternate braking. A pilot of the aircraft may command action of the brakes 116 by means of depressing a brake pedal 118. In use, pressure in the hydraulic fluid may be released via return line paths 138 (not all of which being shown in Figure 3). There are return line paths 138 associated with both the alternate selector valve 122 and alternate servo valve 126. Hydraulic fluid passes via the return lines 138 to the aircraft's hydraulic circuits (shown schematically by the "LP Return" box 136 in Figure 3). The hydraulic return 138 is connected to the aircraft's hydraulic circuits via a check valve 139. There is a return line accumulator 140. An automatically-resetting hydraulic fuse 142 is supplied in the high pressure line between the alternate brake selector valve 122 and the associated servo valve 126.

As mentioned above, it is known to perform a pre-land test of the brakes with the aim of testing the functionality (and availability) of the alternate braking system prior to landing. This may be carried out during the flight. In accordance with the present embodiment, in advance of checking the function of the alternate brake system, as would normally be done, an extra step is taken of ensuring that the return line 138 is adequately filled with fluid (i.e. a replenishing step). This is performed by applying and removing a single brake application in flight, when it is safe to do so, to allow pressure to travel to the brake pistons, and to fill the return lines 138 (although it should be noted that fluid need not travel all the way to the brake pistons for the embodiment to have benefit, particularly if any cavity in the return line is adequately filled).

This can then have the advantage of preventing the system from testing itself (given that the replenishing step is carried out prior to the testing) in what might otherwise have been a cavitated state. This in turn reduces the chance of spurious alerts / spurious system level sanctions, such as the tripping of the hydraulic fuse 142.

The inventor has appreciated that the equivalent system of the prior art can have spurious tripping events as a result of circumstances in which the flow into the supply line is temporarily extremely high as a result of the hydraulic pressure being very low (lacking in fluid) as a result of being connected to the return line.

The inventor has also realised that the complexity, layout of hydraulic lines, extreme pressure variations and occasional high demands on the hydraulic circuit of a typical medium to large commercial aircraft can allow greater risk of cavitation particularly in the return lines. For example, in flight, the braking system is not used and the temperature variations, vibrations and previous operations can cause the lines to be, or to become, cavitated over time, as a result of the hydraulic systems that are typically used on an aircraft. Spurious tripping of one or more hydraulic fuses can then follow. For example, when testing a brake system in flight during the pre-land test the conditions can be sufficiently extreme to lead to such a spurious tripping event. The pre land test is typically at the end of flight, after gear extension (causing high pressure variations), and just before landing. At this time, the temperature of the hydraulic lines (e.g. pipes) are typically very cold, meaning that the fluid has shrunk, contributing to even lower pressure conditions the relevant hydraulic lines. This in turn, leads to an increase in pressure surge and flow rate during the pre-land test leading to spurious fuse tripping.

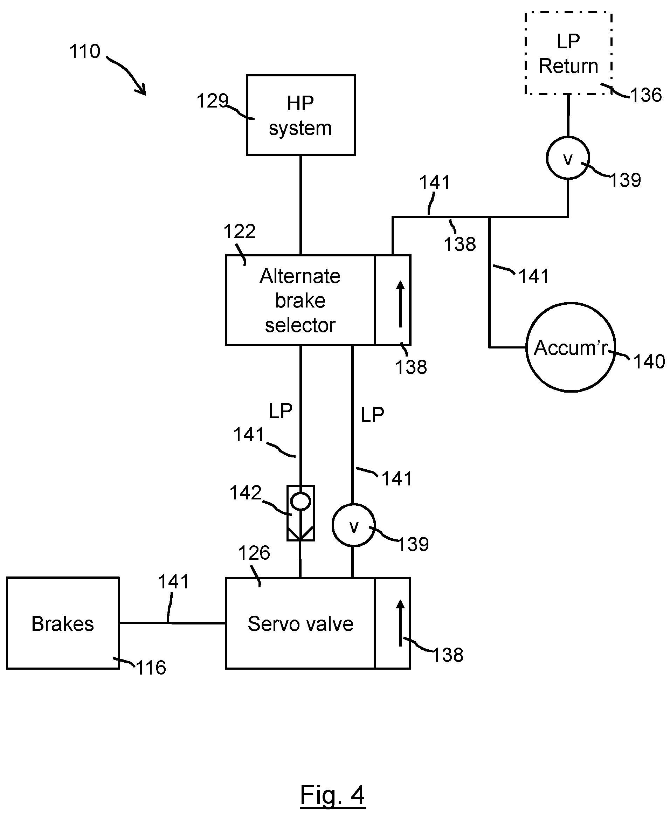

Figure 4 illustrates schematically the presence of various low pressure routes 141 that exist in practice, despite the presence of various check valves / non-return valves 139. Such check valves typically require at least 1 bar pressure difference before they will stop flow in the non-return direction. At low pressures, in the return lines, of say 5 bar or below, pressure fluctuations can often mean that local pressure is of the order of 1 bar, resulting in the check valves allowing some reverse flow. With hydraulic fluid being allowed to flow in directions, and along paths, that are not intended, there can be an increased risk of cavitation in the return line, resulting in unusual behaviours. For example, when there is cavitation in the return line 138 there can be a relative high impulse flow via the fuse 142 between the alternate brake selector valve 122 and the alternate servo-valve on the high pressure line. Such a high impulse flow through the fuse (being a flow rate or volumetric fuse, not directly pressure driven) can cause the fuse to trip, even though the exceptionally high flow rate is sustained for only a relatively short period of time. This then causes the system to indicate a fault. Such problems can for example occur during landing gear retraction when hydraulic loads are particularly high and when the return pressure on the return line 138 reaches zero or close to zero due to the check valves 139 installed on the low pressure routes. Hydraulic fluid can effectively be sucked out of the return line unintentionally. Valve chatter at low pressures can also contribute to, and/or cause, cavitation issues.

The advantages of the above-described embodiment can still be of relevance in aircraft operations when there are no necessary tests in-flight of the alternate brake system. For example, the return line can be filled / re-pressurised, during flight, as a precautionary measure against cavitation in the lines, with there being no intervening testing of the alternate brake system before being used on landing of the aircraft. Such a step can help ensure that the hydraulic lines are filled and ready for operation prior to application of the wheel brakes when on the ground.

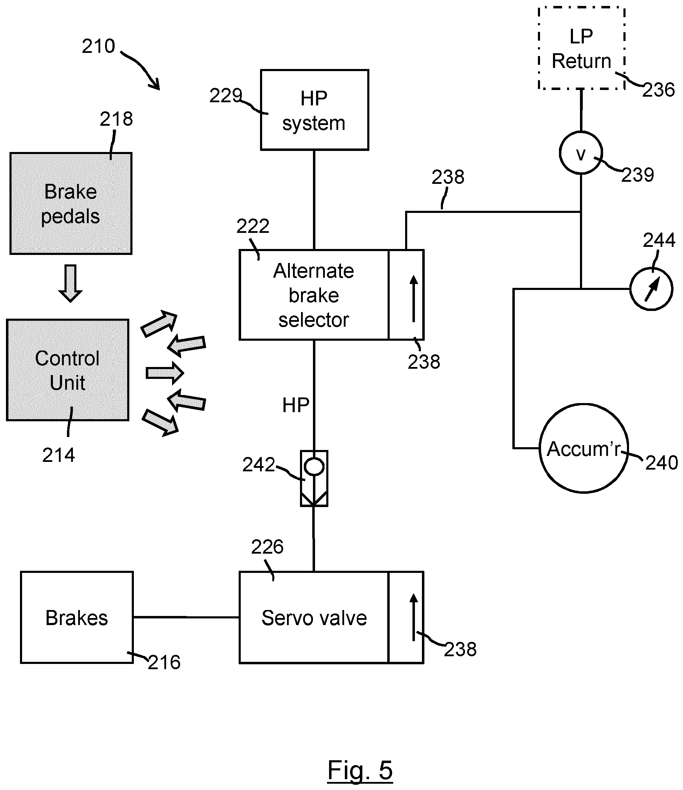

A second embodiment of the invention is illustrated schematically by Figure 5, which is very similar to Figure 3. Similar reference numbers are used for similar parts, but replacing the leading digit of "1" with "2", such that for example the brakes 116 of Figure 3 correspond to the brakes 216 of Figure 5. In this second embodiment, the extra step of ensuring that the return line 238 is adequately filled with fluid is performed with the use of the return line accumulator 240. A pressure transducer 244 is provided which measures the return pressure at the accumulator 240, that also being representative of pressure in the connected return line conduits. If the pressure at the accumulator falls below a pre-defined level (for example a level around ~1 bar), the control unit 214 causes the return line to be re-pressurised / replenished. This may again be via an automated command of a single brake application and/or specific valve actuations, in flight, when safe to do so. As a safety mechanism, a pre-land test check of the correct function of the pressure indication is performed. Also, a limit is placed on the number of replenishments/repressurisations initiated in flight by the control unit to prevent excessive consumption of fluid which might otherwise occur if the number were allowed to be too high, for example in the event of a faulty return line accumulator, or faulty pressure transducer.

To summarise the subject matter of the first and second embodiments of Figures 3 and 5 respectively, an aircraft brake system comprises a supply line for supplying hydraulic fluid to wheel brakes, and an associated return line. Hydraulic fluid is replenished in at least a portion of the return line both (a) before applying a braking force to the one or more wheels of the aircraft during landing and (b) before an intervening, optional, step if so performed of testing the brake system before landing of the aircraft. Replenishing the hydraulic fluid may be conducted by a control unit automatically and/or in response to a measured pressure drop in the return line.

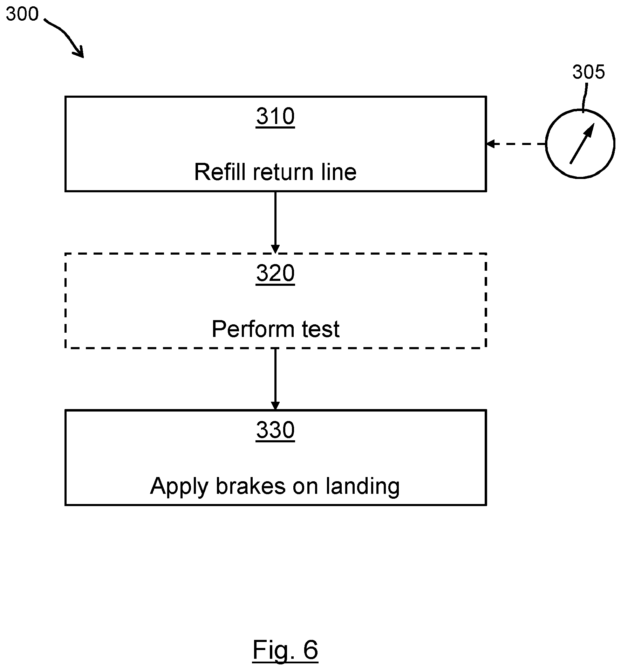

Figure 6 is a flow diagram 300 showing schematically a method of operating the brake system shown in Figures 3 or 5. The method includes a step of the control unit increasing the pressure and/or volume of hydraulic fluid in the return line (the step being represented by box 310), optionally (if the Figure 5 embodiment is being employed) in response to detecting (box 305) a drop in pressure at the return line accumulator. Then an optional step (box 320) of testing the brake system before landing of the aircraft is performed. Subsequently, the aircraft lands and the brake system is activated (represented by box 330) to apply a braking force to the wheels of the aircraft. The extra, advance, step of the control unit increasing the pressure and/or volume of hydraulic fluid in the return line may be achievable with appropriate programming of the control unit. This may be achieved by an appropriate software update for example.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The step of increasing the pressure and/or volume of hydraulic fluid in the return line may be performed by suitable valve actuation that causes flow of hydraulic fluid from the return line accumulator to the return line, without actually actuating the brakes. That step may also require the return line accumulator to be filled with more hydraulic fluid. For example, in order to fill the return line cavity it may only be necessary to operate (i.e. opening and closing) the alternate brake selector valve appropriately.

The control unit preferably performs the step of increasing the pressure and/or volume of hydraulic fluid in the return line automatically; however, in some embodiments that step may be in part be initiated by manual action, for example by flight crew.

The control unit for measuring pressure as sensed by the pressure transducer on the return line may be provided by hardware, which is physically separated from the hardware that provides the control unit that controls and activates the brakes. In other words, while it may be the case that a single control unit is provided for both measuring pressure and for controlling the brakes, it is also possible for such control to be provided by a distributed control unit that effectively comprises multiple sub-units that could be separately provided from each other.

While the present embodiments have all been described in relation to dealing with the risks associated with cavitation in the return lines in a brake system for an aircraft, there may be applications in other hydraulic systems, where cavitation is a potential problem that could be remedied by replenishing hydraulic fluid in supply and/or return lines (and/or in lower pressure lines - or at times during which hydraulic lines are in a low pressure state) at a suitable time. Thus, more generally such embodiments may relate to a method of initialising (or making ready for operation) a hydraulic system (or sub-system) before (preferably immediately before) being used for its primary purpose by performing a (e.g. priming) step of increasing the volume and/or pressure of the hydraulic fluid in a hydraulic line of the system that might otherwise be prone to cavitation, for example as a result of the hydraulic system being a part of a larger hydraulic system which is arranged to be operated using high hydraulic loads, or other extremes, that make cavitation a likely risk, and for example despite the presence of check valves that would normally protect against such things.

Reference should be made to the claims for determining the true scope of the present invention. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of operating the brake system (110) of an aircraft (100), the brake system (110) comprising
a supply line for supplying hydraulic fluid to one or more brakes (116), which are arranged, under the action of the hydraulic fluid, to apply a braking force to one or more wheels (112) of an aircraft landing gear assembly (106) of the aircraft (100), and
a return line (138) for the return of hydraulic fluid from the one or more brakes (116),
the method including steps of
increasing the pressure and/or volume of hydraulic fluid in at least a portion of the return line (138) both (a) before initiating a subsequent step that is performed of activating the brake system (110) to apply a braking force to the one or more wheels (112) of the aircraft (100) during landing and (b) before an intervening, optional, step if so performed of performing a test of the brake system (110) before landing of the aircraft (100).

2. A method according to claim 1, wherein the step of increasing the pressure and/or volume of hydraulic fluid in the return line (138) is conducted by means of (a) activating one or more valves (139) of the brake system (110) and/or (b) activating the brake system (11) to apply a braking force to the one or more wheels (112) of the aircraft (100) before touch-down.

3. A method according to claim 1 or claim 2, wherein the step of increasing the pressure and/or volume of hydraulic fluid in the return line (138) utilises hydraulic fluid in an accumulator (140).

4. A method according to any preceding claim, wherein the step of increasing the pressure and/or volume of hydraulic fluid in the return line (238) is conducted in response to an output from a pressure transducer (244) that provides an indication of the pressure of the hydraulic fluid in said portion of the return line (238).

5. A method according to the combination of claims 3 and 4, wherein the pressure of fluid in the accumulator (240) is indicative of the pressure of the hydraulic fluid in said portion of the return line (238), and the pressure transducer (244) is arranged to measure the pressure of the hydraulic fluid in the accumulator (240).

6. A method according to any preceding claim, wherein the brake system (110) of the aircraft (100) comprises a primary brake sub-system and a secondary brake sub-system and the method is performed in relation to the secondary brake sub-system.

7. A method according to any preceding claim, wherein the method includes performing the intervening step of performing a test of the brake system (110) before landing of the aircraft (100).

8. A hydraulic brake system (110) for activating the wheel brakes (116) of an aircraft (100), the brake system comprising
a supply line for supplying hydraulic fluid to one or more brakes (116), which are arranged, under the action of the hydraulic fluid, to apply a braking force to one or more wheels (112) of an aircraft landing gear assembly (106) of the aircraft (100),
a return line (138) for the return of hydraulic fluid from the one or more brakes (116), and
a control unit (114) configured to operate in each of the following separate and distinct modes of operation:
a first mode of causing an increase of the pressure and/or volume of hydraulic fluid in at least a portion of the return line (138) without simultaneously activating the wheel brakes (116); and
a second mode of causing the activation of the wheel brakes (116); and
optionally a third separate and distinct mode of operation in which the control unit (114) causes a test of the brake system (110) to be performed.

9. A hydraulic brake system (110) according to claim 8, wherein the hydraulic brake system includes a hydraulic fuse (142) which when it trips alerts the control unit (114) of a potential fault in the hydraulic system.

10. A hydraulic brake system (110) according to claim 8 or 9, wherein the control unit (114) is attached to a pressure sensor which is arranged to provide a measure of the pressure in the return line (138), and the control unit (114) is arranged to operate in the first mode of operation in response to the measure of the pressure in the return line (138) detected by the pressure sensor.

11. A hydraulic brake system (110) according to any of claims 8 to 10, wherein the control unit (114) is arranged to operate one or more valves (139) of the hydraulic brake system (110) when in the first mode of operation and is arranged to operate one or more valves (139) of the hydraulic brake system (110) in a different way when in the second mode of operation.

12. A control unit (114) configured for use as the control unit (114) of the hydraulic brake system (110) according to any of claims 8 to 11, the control unit thus being configured, when connected to the hydraulic brake system, to operate in each of the following separate and distinct modes of operation:
a first mode of causing an increase of the pressure and/or volume of hydraulic fluid in at least a portion of the return line (138) without simultaneously activating the wheel brakes (116); and
a second mode of causing the activation of the wheel brakes (116); and
optionally, a third separate and distinct mode of operation in which the control unit (114) causes a test of the brake system (110) to be performed.

13. A computer program product comprising instructions which, when the program is executed by a suitable computer or programmable control unit (114), cause the computer or control unit (114) to be in accordance with the control unit (114) of claim 12.

14. An aircraft (100) including a hydraulic brake system (110) according to any of claims 8 to 11 or a control unit (114) according to claim 12.

## Patentansprüche

1. Verfahren zum Betreiben des Bremssystems (110) eines Luftfahrzeugs (100), wobei das Bremssystem (110) Folgendes umfasst
eine Zufuhrleitung zum Zuführen von Hydraulikfluid zu einer oder mehreren Bremsen (116), die dazu eingerichtet sind, unter der Wirkung des Hydraulikfluids eine Bremskraft auf ein oder mehrere Räder (112) einer Luftfahrzeugfahrwerksanordnung (106) des Luftfahrzeugs (100) aufzubringen, und
eine Rückführleitung (138) zur Rückführung von Hydraulikfluid von der einen oder den mehreren Bremsen (116),
wobei das Verfahren die folgenden Schritte umfasst
Erhöhen des Drucks und/oder Volumens von Hydraulikfluid in zumindest einem Abschnitt der Rückführleitung (138) sowohl (a) vor Initiieren eines durchgeführten nachfolgenden Schritts zum Aktivieren des Bremssystems (110), um eine Bremskraft auf das eine oder die mehreren Räder (112) des Luftfahrzeugs (100) während einer Landung aufzubringen, als auch (b) vor einem gegebenenfalls durchgeführten dazwischenliegenden, optionalen Schritt zum Durchführen einer Prüfung des Bremssystems (110) vor der Landung des Luftfahrzeugs (100).

2. Verfahren nach Anspruch 1, wobei der Schritt zum Erhöhen des Drucks und/oder Volumens von Hydraulikfluid in der Rückführleitung (138) mittels (a) Aktivieren eines oder mehrerer Ventile (139) des Bremssystems (110) und/oder (b) Aktivieren des Bremssystems (11) durchgeführt wird, um eine Bremskraft auf das eine oder die mehreren Räder (112) des Luftfahrzeugs (100) vor einem Aufsetzen aufzubringen.

3. Verfahren nach Anspruch 1 oder Anspruch 2, wobei der Schritt zum Erhöhen des Drucks und/oder Volumens von Hydraulikfluid in der Rückführleitung (138) Hydraulikfluid in einem Akkumulator (140) nutzt.

4. Verfahren nach einem der vorhergehenden Ansprüche, wobei der Schritt zum Erhöhen des Drucks und/oder Volumens von Hydraulikfluid in der Rückführleitung (238) als Reaktion auf eine Ausgabe von einem Druckwandler (244) durchgeführt wird, der eine Anzeige des Drucks des Hydraulikfluids in dem Abschnitt der Rückführleitung (238) bereitstellt.

5. Verfahren nach Anspruch 3 und 4 in Kombination, wobei der Druck von Fluid in dem Akkumulator (240) den Druck des Hydraulikfluids in dem Abschnitt der Rückführleitung (238) anzeigt, und wobei der Druckwandler (244) dazu eingerichtet ist, den Druck des Hydraulikfluids in dem Akkumulator (240) zu messen.

6. Verfahren nach einem der vorhergehenden Ansprüche, wobei das Bremssystem (110) des Luftfahrzeugs (100) ein primäres Bremsteilsystem und ein sekundäres Bremsteilsystem umfasst und das Verfahren in Bezug auf das sekundäre Bremsteilsystem durchgeführt wird.

7. Verfahren nach einem der vorhergehenden Ansprüche, wobei das Verfahren Durchführen des dazwischenliegenden Schritts zum Durchführen einer Prüfung des Bremssystems (110) vor der Landung des Luftfahrzeugs (100) umfasst.

8. Hydraulisches Bremssystem (110) zum Aktivieren der Radbremsen (116) eines Luftfahrzeugs (100), wobei das Bremssystem Folgendes umfasst
eine Zufuhrleitung zum Zuführen von Hydraulikfluid zu einer oder mehreren Bremsen (116), die dazu eingerichtet sind, unter der Wirkung des Hydraulikfluids eine Bremskraft auf ein oder mehrere Räder (112) einer Luftfahrzeugfahrwerksanordnung (106) des Luftfahrzeugs (100) aufzubringen,
eine Rückführleitung (138) zur Rückführung von Hydraulikfluid von der einen oder den mehreren Bremsen (116), und
eine Steuereinheit (114), die dazu ausgelegt ist, in jedem der folgenden separaten und unterschiedlichen Betriebsmodi betrieben zu werden:
einem ersten Modus zum Bewirken einer Erhöhung des Drucks und/oder Volumens von Hydraulikfluid in zumindest einem Abschnitt der Rückführleitung (138) ohne gleichzeitiges Aktivieren der Radbremsen (116); und
einem zweiten Modus zum Bewirken der Aktivierung der Radbremsen (116); und
optional einem dritten separaten und unterschiedlichen Betriebsmodus, in dem die Steuereinheit (114) bewirkt, dass eine Prüfung des Bremssystems (110) durchgeführt wird.

9. Hydraulisches Bremssystem (110) nach Anspruch 8, wobei das hydraulische Bremssystem eine hydraulische Sicherung (142) umfasst, die, wenn sie ausgelöst wird, die Steuereinheit (114) vor einer möglichen Störung in dem hydraulischen System warnt.

10. Hydraulisches Bremssystem (110) nach Anspruch 8 oder 9, wobei die Steuereinheit (114) an einem Drucksensor angebracht ist, der dazu eingerichtet ist, eine Messung des Drucks in der Rückführleitung (138) bereitzustellen, und wobei die Steuereinheit (114) dazu eingerichtet ist, als Reaktion auf die durch den Drucksensor detektierte Messung des Drucks in der Rückführleitung (138) in dem ersten Betriebsmodus betrieben zu werden.

11. Hydraulisches Bremssystem (110) nach einem der Ansprüche 8 bis 10, wobei die Steuereinheit (114) dazu eingerichtet ist, ein oder mehrere Ventile (139) des hydraulischen Bremssystems (110) zu betreiben, wenn sie sich in dem ersten Betriebsmodus befindet, und dazu eingerichtet ist, ein oder mehrere Ventile (139) des hydraulischen Bremssystems (110) auf eine andere Weise zu betreiben, wenn sie sich in dem zweiten Betriebsmodus befindet.

12. Steuereinheit (114), die zur Verwendung als die Steuereinheit (114) des hydraulischen Bremssystems (110) nach einem der Ansprüche 8 bis 11 ausgelegt ist, wobei die Steuereinheit somit dazu ausgelegt ist, wenn sie mit dem hydraulischen Bremssystem verbunden ist, in jeweils den folgenden separaten und unterschiedlichen Betriebsmodi betrieben zu werden:
einem ersten Modus zum Bewirken einer Erhöhung des Drucks und/oder Volumens von Hydraulikfluid in zumindest einem Abschnitt der Rückführleitung (138) ohne gleichzeitiges Aktivieren der Radbremsen (116); und
einem zweiten Modus zum Bewirken der Aktivierung der Radbremsen (116); und
optional einem dritten separaten und unterschiedlichen Betriebsmodus, in dem die Steuereinheit (114) bewirkt, dass eine Prüfung des Bremssystems (110) durchgeführt wird.

13. Computerprogrammprodukt, das Anweisungen umfasst, die, wenn das Programm durch einen geeigneten Computer oder eine geeignete programmierbare Steuereinheit (114) ausgeführt wird, bewirken, dass der Computer oder die Steuereinheit (114) gemäß der Steuereinheit (114) nach Anspruch 12 ist.

14. Luftfahrzeug (100), das ein hydraulisches Bremssystem (110) nach einem der Ansprüche 8 bis 11 oder eine Steuereinheit (114) nach Anspruch 12 umfasst.

## Revendications

1. Procédé d'actionnement du système de freinage (110) d'un aéronef (100), le système de freinage (110) comprenant
une conduite d'alimentation destinée à alimenter en fluide hydraulique un ou plusieurs freins (116), qui sont agencés, sous l'action du fluide hydraulique, pour appliquer une force de freinage à une ou plusieurs roues (112) d'un train d'atterrissage d'aéronef (106) de l'aéronef (100), et
une conduite de retour (138) pour le retour du fluide hydraulique depuis le ou les freins (116),
le procédé comprenant les étapes suivantes
l'augmentation de la pression et/ou du volume de fluide hydraulique dans au moins une partie de la conduite de retour (138) à la fois (a) avant d'initier une étape ultérieure qui est effectuée consistant à activer le système de freinage (110) pour appliquer une force de freinage à la ou aux roues (112) de l'aéronef (100) pendant l'atterrissage et (b) avant une étape d'intervention, facultative, si elle est effectuée consistant à effectuer un test du système de freinage (110) avant l'atterrissage de l'aéronef (100).

2. Procédé selon la revendication 1, dans lequel l'étape d'augmentation de la pression et/ou du volume de fluide hydraulique dans la conduite de retour (138) est menée au moyen de (a) l'activation d'une ou plusieurs soupapes (139) du système de freinage (110) et/ou (b) l'activation du système de freinage (11) pour appliquer une force de freinage à la ou aux roues (112) de l'aéronef (100) avant l'atterrissage.

3. Procédé selon la revendication 1 ou la revendication 2, dans lequel l'étape d'augmentation de la pression et/ou du volume de fluide hydraulique dans la conduite de retour (138) utilise un fluide hydraulique dans un accumulateur (140).

4. Procédé selon l'une quelconque des revendications précédentes, dans lequel l'étape d'augmentation de la pression et/ou du volume de fluide hydraulique dans la conduite de retour (238) est menée en réponse à une sortie d'un transducteur de pression (244) qui fournit une indication de la pression du fluide hydraulique dans ladite partie de la conduite de retour (238).

5. Procédé selon la combinaison des revendications 3 et 4, dans lequel la pression du fluide dans l'accumulateur (240) indique la pression du fluide hydraulique dans ladite partie de la conduite de retour (238), et le transducteur de pression (244) est agencé pour mesurer la pression du fluide hydraulique dans l'accumulateur (240).

6. Procédé selon l'une quelconque des revendications précédentes, dans lequel le système de freinage (110) de l'aéronef (100) comprend un sous-système de freinage primaire et un sous-système de freinage secondaire et le procédé est exécuté en relation avec le sous-système de freinage secondaire.

7. Procédé selon l'une quelconque des revendications précédentes, dans lequel le procédé comprend l'exécution de l'étape intermédiaire consistant à effectuer un test du système de freinage (110) avant l'atterrissage de l'aéronef (100).

8. Système de freinage hydraulique (110) pour activer les freins de roue (116) d'un aéronef (100), le système de freinage comprenant
une conduite d'alimentation destinée à alimenter en fluide hydraulique un ou plusieurs freins (116), qui sont agencés, sous l'action du fluide hydraulique, pour appliquer une force de freinage à une ou plusieurs roues (112) d'un train d'atterrissage d'aéronef (106) de l'aéronef (100),
une conduite de retour (138) pour le retour du fluide hydraulique depuis le ou les freins (116), et
une unité de commande (114) configurée pour fonctionner dans chacun des modes de fonctionnement distincts et séparés suivants :
un premier mode consistant à provoquer une augmentation de la pression et/ou du volume de fluide hydraulique dans au moins une partie de la conduite de retour (138) sans activer simultanément les freins de roue (116) ; et
un deuxième mode consistant à activer les freins de roue (116) ; et
facultativement, un troisième mode de fonctionnement distinct et séparé dans lequel l'unité de commande (114) provoque un test du système de freinage (110).

9. Système de freinage hydraulique (110) selon la revendication 8, dans lequel le système de freinage hydraulique comprend un fusible hydraulique (142) qui, lorsqu'il se déclenche, avertit l'unité de commande (114) d'un défaut potentiel dans le système hydraulique.

10. Système de freinage hydraulique (110) selon la revendication 8 ou 9, dans lequel l'unité de commande (114) est fixée à un capteur de pression qui est agencé pour fournir une mesure de la pression dans la conduite de retour (138), et l'unité de commande (114) est agencée pour fonctionner dans le premier mode de fonctionnement en réponse à la mesure de la pression dans la conduite de retour (138) détectée par le capteur de pression.

11. Système de freinage hydraulique (110) selon l'une quelconque des revendications 8 à 10, dans lequel l'unité de commande (114) est agencée pour actionner une ou plusieurs soupapes (139) du système de freinage hydraulique (110) lorsqu'elle est dans le premier mode de fonctionnement et est agencée pour actionner une ou plusieurs soupapes (139) du système de freinage hydraulique (110) d'une manière différente lorsqu'elle est dans le deuxième mode de fonctionnement.

12. Unité de commande (114) configurée pour être utilisée comme unité de commande (114) du système de freinage hydraulique (110) selon l'une quelconque des revendications 8 à 11, l'unité de commande étant ainsi configurée pour, lorsqu'elle est connectée au système de freinage hydraulique, fonctionner dans chacun des modes de fonctionnement distincts et séparés suivants :
un premier mode consistant à provoquer une augmentation de la pression et/ou du volume de fluide hydraulique dans au moins une partie de la conduite de retour (138) sans activer simultanément les freins de roue (116) ; et
un deuxième mode consistant à activer les freins de roue (116) ; et
facultativement, un troisième mode de fonctionnement distinct et séparé dans lequel l'unité de commande (114) provoque un test du système de freinage (110).

13. Produit programme informatique comprenant des instructions qui, lorsque le programme est exécuté par un ordinateur ou une unité de commande programmable approprié(e) (114), amènent l'ordinateur ou l'unité de commande (114) à être en conformité avec l'unité de commande (114) de la revendication 12.

14. Aéronef (100) comprenant un système de freinage hydraulique (110) selon l'une quelconque des revendications 8 à 11 ou une unité de commande (114) selon la revendication 12.
